**Europäisches Patentamt**

**European Patent Office**

**Office européen des brevets**

(19)

(11)  **EP 1 424 315 A1**

(12)  **EUROPÄISCHE PATENTANMELDUNG**

(43) Veröffentlichungstag:
02.06.2004  Patentblatt 2004/23

(51) Int Cl.$^7$: **C03C 17/36**

(21) Anmeldenummer: 03025805.7

(22) Anmeldetag: **10.11.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **29.11.2002  CH 20122002**

(71) Anmelder: **Glas Trösch AG**
**9422 Bützberg (CH)**

(72) Erfinder:
- **Thöni, Werner**
  **7304 Maienfeld (CH)**
- **Rögels, Stephan**
  **79395 Neuenburg (DE)**

(74) Vertreter: **Wegmann, Urs**
**Saschela 3**
**9479 Oberschan (CH)**

(54)  **Sonnenschutzglas**

(57)  Ein Sonnenschutzglas mit hoher Selektivität und tiefem Gesamtenergiedurchlassgrad, welches auch bis zu hohen Betrachtungswinkeln BW von bis zu 45° eine konstante Reflexionsfarbe zeigt, besteht aus einem Glassubstrat 1 enthaltend eine Schichtsequenz mit einer ersten Antireflexschicht 3; eine erste metallische IR-reflektierende Schicht 4; eine erste Barriereschicht 5; eine zweite Antireflexschicht 6; eine zweite metallisch IR-reflektierende Schicht 7; eine zweite Barriereschicht 8; eine dritte Antireflexschicht 9; wobei eine lichtabsorbierende Schicht 2 zwischen dem Glassubstrat 1 und der ersten metallischen IR-reflektierenden Schicht 4 vorgesehen ist.

Fig. 1

EP 1 424 315 A1

**Beschreibung**

Die Erfindung bezieht sich auf ein Sonnenschutzglas mit einem Sonnenschutzbeschichtungssystem gemäss dem Oberbegriff von Anspruch 1, sowie auf ein Verfahren zur Herstellung eines Sonnenschutzglases mit einem Sonnenschutzbeschichtungssystem gemäss Oberbegriff des Anspruch 8.

Verglasungen an Gebäuden werden heute vermehrt sehr grossflächig ausgebildet. Es werden heute sogar architektonisch ganze Gebäudefassaden als transparente Glasfassaden ausgeführt. An solche Gläser werden deshalb nicht nur in Bezug auf Wärmeisolation besondere Anforderungen gestellt, sondern auch an den Wärmeschutz vor Sonneneinstrahlung.

Im Architekturglasbereich werden folgende Definitionen verwendet:

- Gesamtenergiedurchlass (g): Mass für die totale Wärmeeinstrahlung bestehend aus dem direkten Sonnenlicht und der sekundären Wärmeabgabe nach innen, infolge der Absorption des Glases.
- Lichttransmission (Tv): prozentualer Anteil (0 bis 100%) des sichtbaren Lichtes, das von der Verglasung durchgelassen wird.
- Lichtreflexion (Rv): prozentualer Anteil (0 bis 100%) des sichtbaren Lichtes, das von der Verglasung reflektiert wird.
- Spektrale Selektivität (S): S = Tv/g
- Farbkoordinaten: L*, a*, b*

Es wird hierbei auf den Farbraum CIE L*, a*, b* Bezug genommen gemäss K. McLaren, "The Development of the CIE 1976 (L*,a*,b*) uniform colour - space and colour difference formula", Journal of the Society of Dyers and Colourists '92, pp. 338 - 341, (1976).

$$\text{- Farbabweichung } \Delta E: \Delta E = [(\Delta L^*)^2 + (\Delta a^*)^2 + (\Delta b^*)^2]^{\frac{1}{2}}.$$

Die minimale Farbdifferenz, die vom Auge gerade noch aufgelöst werden kann, wird normalerweise als 1 angenommen. Typische Farbabweichung für ein farbstabiles Produkt ist 3.

Die optischen Eigenschaften von derartigen Verglasungen basieren auf den Standards der "International Commision on Illumination CIE". Die Werte beziehen sich auf eine CIE Standardbeleuchtung D65 und einen 10°-Beobachter. Hierbei ist der Winkel gemeint, der vom rechtwinkligen Lot auf die Glasoberfläche abweicht. Das Lot auf die Glasoberfläche bildet hiermit die Nullgradlinie. Farbkoordinaten werden im CIELab - Koordinatensystem dargestellt. Die Zahlenangaben beziehen sich hierbei auf eine Doppelglasanordnung bestehend aus zwei 6 mm dicken Klargläsern, die mit 12 mm beabstandet angeordnet sind, wobei das eine Klarglas (Substrat) auf der inneren Seite ein Schichtsystem als Sonnenschutzbeschichtung aufweist. Die Sonnenschutzschicht ist somit auf Position 2 der Doppelverglasung das heisst auf der Innenseite des äusseren Klarglases angebracht.

Bei Sonnenschutzgläsern werden Anordnungen mit hoher Selektivität und tiefem Gesamtenergiedurchlassgrad angestrebt. Für solche Sonnenschutzgläser werden beschichtete Gläser verwendet, welche eine Infrarot (IR) - reflektierende Schicht beinhalten, in der Regel aus Silber. Wie bekannt ist, werden bessere Eigenschaften erzielt, wenn ein Sonnenschutzglas eine Doppelsilberbeschichtung als IR-reflektierende Schicht enthält. Solche Schichten werden in englischer Sprache auch als sogenannte "Low-E^2" Schichten bezeichnet. Ein solches bekanntes Sonnenschutzschichtsystem besteht beispielsweise aus einem Glassubstrat basierend auf folgender Schichtenfolge: Substrat (Glas) / Dielektrikum /IR-reflektierendes Metall / Barriereschicht / Dielektrikum / IR-reflektierendes Metall / Barriereschicht / Dielektrikum.

Das IR-reflektierende Metall ist hierbei typischerweise Silber oder eine Silberlegierung mit einer Dicke von 8 nm bis 20 nm und reflektiert die Sonnenstrahlung und die thermische Energie, während das sichtbare Licht mehrheitlich durchgelassen wird. Semikristallines Zinkoxyd wird oft als Grundschicht für die Silberschicht verwendet, um deren Kristallwachstum zu verbessern und damit die optischen und wärmetechnischen Eigenschaften zu optimieren (Keimbildungsschicht).

Die absorptionsfreien Dielektrika werden zur Reflexionsminderung der Silberschichten verwendet und dienen der Erhöhung der Umweltbeständigkeit des Schichtsystems. Die Dicke dieser Schichten kann in einem grösseren Bereich variieren, sind aber typisch 20 nm bis 40 nm für Grund- und Deckschicht und 70 nm bis 90 nm für die zentrale Schicht. Als Schichtmaterialien werden typisch Metalloxyde (Titanoxyd, Bismutoxid, Zinkoxyd, Zinnoxyd) oder Metallnitride (Siliziumnitrid) verwendet und können in sich wiederum aus Teilschichten verschiedener Zusammensetzung bestehen. Die Barriereschichten schützen das untenliegende Silber vor Oxydation, wenn das darüberliegende Metalloxyd durch reaktives Zerstäuben in einer sauerstoffhaltigen Atmosphäre abgeschieden wird. Diese Schichten bestehen typischerweise aus Metall, partiell oxydiertem Metall, Metalloxyd oder Metallnitrid in einer Dicke von 1 nm bis 2 nm. Nach dem Beschichtungsvorgang sind diese Barriereschichten praktisch absorptionsfrei.

Substantieller Sonnenschutz lässt sich durch Maximierung der Selektivität des Schichtsystems erreichen (typisch Werte von 1.8 bis 2). Dies wird primär durch Erhöhung der Schichtdicke der Silberschichten erreicht. Der visuelle Eindruck der Verglasung lässt sich durch geeignete Wahl des Schichtaufbaus und der individuellen Schichtdicken anpassen. Speziell für Architekturanwendungen in kommerziellen Märkten wird eine Reduktion der Transmission im Sichtbaren auf 60 %, 50 % oder sogar 40 % gefordert, um Überhitzung durch eingestrahltes Sonnenlicht im sichtbaren Bereich des Sonnenspektrums zu vermeiden. Um die Transmission zu verringern, muss deshalb zusätzlich Absorption in das Schichtpaket eingefügt werden.

Ein bekannter Weg, die Transmission im Sichtbaren zu reduzieren und die Sonnenschutzeigenschaften von Silberschichtsystemen zu verbessern, ist die Erhöhung der Schichtdicke der Silberschicht oder der Barriereschicht über dem Silber (Coated Glass Applications and Markets, R.J. Hill and S.J. Nadel, BOC Coating Division, 1999, p. 75) und auch EP 0 611 213 Beispiel 6. In einem solchen bekannten Doppelsilberschichtsystem führt dies aber zu unerwünschten metallischen Reflexionsfarben, beziehungsweise zu starker Betrachtungswinkelabhängigkeit bei Transmissionswerten unter 65 %.

Aus der EP 0 918 044 A1 ist bekannt geworden, die Abhängigkeit vom Betrachtungswinkel durch eine zusätzliche Absorptionsschicht zu verbessern, die unabhängig von den Barriereschichten ist, wobei diese unter der zweiten Silberschicht vom Glas entfernt angeordnet werden soll.

In der EP 1 044 934 A2 ist ein Einfachsilberschichtsystem beschrieben, bei welchem eine Absorptionsschicht direkt als erste Schicht auf das Substrat aufgebracht ist, um die Transmission zu reduzieren.

In der EP 0 847 965 A1 wird vorgeschlagen, eine metallische Barriereschicht direkt unterhalb der Silberschicht einzusetzen, um deren Oxydation während eines nachfolgenden Wärmebehandlungsschrittes zu verhindern. Diese Metallschicht wird während der Wärmebehandlung oxydiert und dadurch im wesentlichen absorptionsfrei.

Die bisher bekannten Doppelsilberschichtsysteme zeigen bei grösserem Betrachtungswinkel störende Veränderungen der Reflexionsfarbe. Verbesserte Selektivität mit Hilfe dickerer Silberschichten geht zudem Hand in Hand mit einer unerwünschten Zunahme der Lichtreflexion. Dies kann nur teilweise kompensiert werden durch Verwendung von hochbrechenden Materialien in der unterliegenden Antireflexionsschicht. Um die Reflexionseigenschaften der Silberschichten im infraroten Spektralbereich zu verbessern, wird entsprechend dem Stand der Technik normalerweise eine semikristalline Zinkoxydschicht direkt unter dem Silber verwendet. Wird entsprechend der EP 0 918 044 A1 diese "Keimbildungsschicht" durch eine metallische, absorbierende Schicht ersetzt, muss mit negativen Einflüssen auf die Qualität der Silberschichten und damit auf deren Sonnen- und Wärmeschutzeigenschaften gerechnet werden.

Es ist somit Aufgabe der vorliegenden Erfindung, die Nachteile des Standes der Technik zu beseitigen. Insbesondere ist es Aufgabe der vorliegenden Erfindung, ein Sonnenschutzglas mit einem Beschichtungssystem zu realisieren, welches im wesentlichen eine konstante Reflexionsfarbe bei tiefer Lichtreflexion unabhängig vom Betrachtungswinkel aufweist. Zusätzlich ist es Aufgabe der vorliegenden Erfindung, die bereits bekannten und üblichen Produktionsverfahren für solche Schichtsysteme verwenden zu können. Dies sind insbesondere Inline - Zerstäubungsanlagen für den Architekturglasbereich mit den bekannten Vakuumbeschichtungsverfahren wie mit Kathodenzerstäubungskonfigurationen mit einer Gruppe beispielsweise von Titankathoden (oder anderen Kathoden für hochbrechende Materialien) gefolgt von einer Gruppe von Zinkkathoden (oder anderen Kathoden für mittelbrechende Materialien), und anschliessend einer Gruppe von Metallkathoden für die Funktionsschicht. Solche Anordnungen sollten ohne grössere Rekonfiguration eingesetzt werden können, um eine hohe Wirtschaftlichkeit zu gewährleisten. Als Zerstäubungskathoden werden vorteilhafterweise Magnetron - Zerstäubungsquellen eingesetzt und insbesondere für die Abscheidung der Dielektrischen Schichten DC - reaktiv betrieben, vorteilhafterweise mit Pulsbetrieb.

Diese Aufgabe wird erfindungsgemäss durch die Merkmale der Ansprüche 1 und 8 gelöst. Weitere vorteilhafte Ausführungsformen beinhalten die abhängigen Patentansprüche. Erfindungsgemäss soll das Schichtsystem derart ausgebildet werden, dass die Reflektionsfarbe im wesentlichen konstant ($\Delta E < 3$) bleibt und tiefe Lichtreflexion ($Rv < 15$ %) ermöglicht wird unabhängig von einem Betrachtungswinkel bis zu einem Winkel von mindestens 45°. Diese sehr guten Werte für eine Sonnenschutzglasanordnung mit zwei beabstandeten Gläsern, entsprechend der vorerwähnten Konfiguration 6 mm Glas, 12 mm Abstand, 6 mm Glas mit einem innenliegenden Schichtsystem können erfindungsgemäss erzielt werden, wenn eine Absorptionsschicht vor der ersten dem Glassubstrat zugerichteten Silberschicht angeordnet ist, also zwischen Substrat und der ersten Silberschicht bei einem Doppelsilberschichtsystem. Hierbei wird eine besonders optimale Antireflexionswirkung erzielt. Weiterhin ist es vorteilhaft bezüglich Verminderung der Reflexion, zusätzlich ein niederbrechendes Schichtmaterial in der untersten Antireflexschicht zu verwenden.

Die Erfindung wird anschliessend beispielsweise anhand von schematischen Figuren erläutert:

Fig. 1    ein Beispiel eines erfindungsgemässen und bevorzugten Schichtaufbaus;

Fig. 2    die Winkelabhängigkeit der Lichtreflexion und der Farbabweichung $\Delta E$ einer erfindungsgemässen Anordnung;

Fig. 3    die Winkelabhängigkeit der Lichtreflexion und der Farbabweichung ΔE entsprechend einer Anordnung nach dem Stand der Technik.

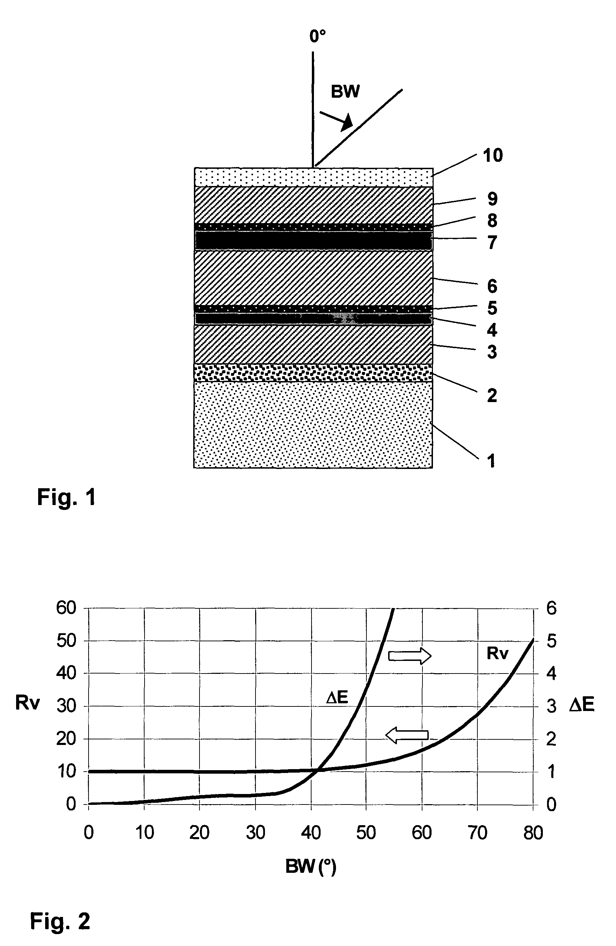

Ein Sonnenschutzschichtsystem entsprechend der Erfindung wird beispielsweise und bevorzugt durch Kathodenzerstäuben insbesondere Magnetronzerstäuben mit der folgenden Schichtfolge auf ein Klarglas 1 erzielt wie, schematisch in Fig. 1 dargestellt ist.

Optional kann vorzugsweise eine erste dielektrische Schicht direkt auf das Glas 1 als keimbildende Schicht aufgebracht werden. Diese ist beispielsweise eine 2 nm dicke Schicht aus Titanoxyd, welches durch Kathodenzerstäuben vom Titan in einer sauerstoffhaltigen Atmosphäre abgeschieden wird. Erfindungsgemäss folgt nun eine absorbierende Schicht 2 aus metallischem Titan ungefähr 3,4 nm dick, durch Kathodenzerstäuben von Titan in einer reinen Argonatmosphäre erzeugt:

Eine reflexvermindernde Zinkoxydschicht 3, etwa 27,5 nm dick, durch Kathodenzerstäuben von Zink in einer sauerstoffhaltigen Atmosphäre abgeschieden;

eine erste IR-reflektierende Silberschicht 4, etwa 12,5 nm dick, durch Kathodenzerstäuben von Silber in einer reinen Argonatmosphäre abgeschieden;

eine erste im wesentlichen absorptionsfreie Barriereschicht 5, etwa 2 nm dick, durch Kathodenzerstäuben von Titan in einer reinen Argonatmosphäre (diese Schicht wird während der nachfolgenden Beschichtung der Antireflexionsschicht in einer sauerstoffhaltigen Atmosphäre aufoxidiert);

eine reflexmindernde Zinkoxydschicht 6, etwa 82,1 nm dick, durch Kathodenzerstäuben von Zink in einer sauerstoffhaltigen Atmosphäre erzeugt;

eine zweite IR-reflektierende Silberschicht 7, etwa 15,6 nm dick, durch Kathodenzerstäuben von Silber in einer reinen Argonatmosphäre abgeschieden;

eine zweite im wesentlichen absorptionsfreie Barriereschicht 8, etwa 2 nm dick, durch Kathodenzerstäuben von Titan in einer reinen Argonatmosphäre (diese Schicht wird während der nachfolgenden Beschichtung der Antireflexionsschicht in einer sauerstoffhaltigen Atmosphäre aufoxidiert);

eine weitere reflexmindernde Zinkoxydschicht 9, etwa 33,3 nm dick, durch Kathodenzerstäuben von Zink in einer sauerstoffhaltigen Atmosphäre abgeschieden;

eine abschliessende Schutzschicht 10 aus Siliziumnitrid, etwa 5 nm dick, durch Kathodenzerstäuben in einer stickstoffhaltigen Atmosphäre erzeugt.

Diese vorerwähnte Schichtfolge ist als ein bevorzugtes Beispiel aufzufassen. Selbstverständlich können auch andere IR-reflektierende Metallschichten verwendet werden oder auch andere Materialien für die reflexmindernden Schichten, die Barriereschichten, die Absorptionsschicht und die Schutzschicht. Im weiteren ist es selbstverständlich möglich, Funktionen von einzelnen Schichten durch mehrere Schichten zu ersetzen und/oder zu ergänzen, also weitere Schichten in die vorerwähnte Sequenz einzufügen. Das vorerwähnte Schichtsystem erzielt nun folgende Schichteigenschaften:

Tabelle 1

|  | Einzelglas | Doppelverglasung |
|---|---|---|
| Lichttransmission | Tv=58,6% | Tv=53,2% |
| Farbkoordinaten | a*=-4.8, b*=2.9 | a*=-5.6, b*=3.6 |
| Lichtreflexion | Rv=6.5% | Rv=10.1% |
| Farbkoordinaten | a*=-0.5, b*=-13.6 | a*=-3.2, b*=-8.6 |
| g-Wert |  | 27.1 |
| Selektivität S |  | 1.9 |

In Fig. 2 ist die Winkelabhängigkeit BW der Lichtreflexion Rv und der Farbabweichung ΔE dargestellt. Wie daraus ersichtlich ist, bleibt ΔE unterhalb der Sichtbarkeitsgrenze von 1 bis zu einem Betrachtungswinkel von 40° und erreicht einen Wert von 3 erst bei 50°. Die Lichtreflexion ist hierbei nur 10 % auch bei einem hohen Betrachtungswinkel BW. Der Betrachtungswinkel wird hierbei bezogen auf die Richtung des Lotes auf die Glasoberfläche, wobei das Lot selber 0° darstellt und die parallele Richtung zur Glasoberfläche 90°.

Im Gegensatz zu diesen sehr vorteilhaften Werten gemäss dem erfindungsgemässen Sonnenschutzbeschichtungssystem wird in der Folge ein übliches bekanntes Schichtsystem vergleichsweise dargestellt. Dieses System besteht aus einem 6 mm dicken Klarglas, auf welches ebenfalls durch Kathodenzerstäuben eine Schichtfolge aufgebracht ist. Auf das Klarglas wird eine erste reflexmindernde Zinkoxydschicht, etwa 48,5 nm dick, durch Kathodenzerstäuben von Zink in einer sauerstoffhaltigen Atmosphäre aufgebracht;

eine erste IR-reflektierende Silberschicht, etwa 12,5 nm dick, durch Kathodenzerstäuben von Silber in einer reinen Argonatmosphäre abgeschieden;

eine erste absorbierende Barriereschicht, etwa 5,4 nm dick, wird durch Kathodenzerstäuben von Titan in einer reinen Argonatmosphäre (diese Schicht wird während der nachfolgenden Beschichtung der Antireflexionsschicht in einer sauerstoffhaltigen Atmosphäre nur teilweise aufoxidiert) abgeschieden;

eine reflexmindernde Zinkoxydschicht, etwa 84,9 nm dick, welche durch Kathodenzerstäuben von Zink in einer sauerstoffhaltigen Atmosphäre abgeschieden wird;

eine zweite IR-reflektierende Silberschicht, etwa 14,8 nm dick, durch Kathodenzerstäuben von Silber in einer reinen Argonatmosphäre abgeschieden;

eine zweite, im wesentlichen absorptionsfreie Barriereschicht, etwa 2 nm dick, durch Kathodenzerstäuben von Titan in einer reinen Argonatmosphäre (diese Schicht wird während der nachfolgenden Beschichtung der Antireflexionsschicht in einer sauderstoffhaltigen Atmosphäre aufoxidiert) abgeschieden;

eine weitere reflexmindernde Zinkoxydschicht, etwa 31,4 nm dick, durch Kathodenzerstäuben von Zink in einer sauerstoffhaltigen Atmosphäre abgeschieden;

eine Schutzschicht aus Titanoxid, etwa 2 nm dick, durch Kathodenzerstäuben von Titan in einer sauerstoffhaltigen Atmosphäre abgeschieden;

eine abschliessende Schutzschicht aus Zinkoxyd, etwa 2 nm dick, durch Kathodenzerstäuben von Zink in einer sauerstoffhaltigen Atmosphäre abgeschieden.

Die optischen Eigenschaften des beschichteten Glases und der entsprechenden Doppelverglasung gehen aus folgender Tabelle hervor:

Tabelle 2

|  | Einzelglas | Doppelverglasung |
|---|---|---|
| Lichttransmission | Tv=59,2 | Tv=52,3 |
| Farbkoordinaten | a*=-4.9, b*=3.1 | a*=-5.9, b*=2.3 |
| Lichtreflexion | Rv=6.2% | Rv=17.4% |
| Farbkoordinaten | a*=-2.8, b*=-19.8 | a*=-6.5, b*=-14 |
| g-Wert |  | 27.4 |
| Selektivität S |  | 1.9 |

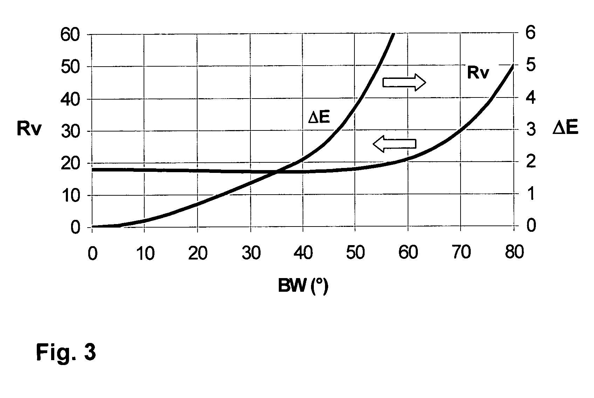

In Fig. 3 ist ebenfalls die Winkelabhängigkeit BW der Lichtreflexion Rv und der Farbabweichung ΔE dargestellt. Wie hieraus ersichtlich ist, steigt die Farbabweichung ΔE mit zunehmendem Betrachtungswinkel BW rasch an und erreicht die Sichtbarkeitsgrenze schon bei 25°. Die Lichtreflexion Rv ist mit 17 % sehr hoch. Diese Werte liefern dem Betrachter, beispielsweise einer Glasfassade, einen sehr negativen Eindruck.

Erfindungsgemäss können die Sonnenschutzeigenschaften einer Sonnenschutzglasanordnung mit dem Beschichtungssystem (Selektivität nahe 2, tiefer g-Wert < 30) mit einfachen Mitteln wesentlich verbessert werden, ohne Kompromisse eingehen zu müssen bezüglich dem visuellen Eindruck, also bezüglich der Farbneutralität bei höheren Betrachtungswinkeln und bei gleichzeitiger Vermeidung von hohen Reflexionswerten als Resultat der dickeren Silberschichten. Es werden Lichtreflexionswerte erreicht, die vergleichbar sind mit den im Markt etablierten absorptionsfreien Einzel- und Doppelsilberschichtsystemen, wobei im Gegensatz zu den bekannten Systemen ein höherer Betrachtungswinkel von bis zu 45° möglich ist, ohne Farbveränderungen feststellen zu müssen. Inline - Zerstäubungsanlagen können ausserdem in ihrer Standardkonfiguration für absorptionsfreie Doppelsilberwärmeschutzschichten ohne wesentliche Rekonfiguration weiterhin eingesetzt werden, womit auch eine hohe Wirtschaftlichkeit des Herstellungsverfahrens realisierbar ist.

**Patentansprüche**

1.   Sonnenschutzglas mit einem Sonnenschutzbeschichtungssystem (2-10)enthaltend mindestens folgende Schichten in Sequenz, angeordnet auf einem Glassubstrat(1):

- eine erste Antireflexschicht (3);
- eine erste metallische, Infrarot reflektierende Schicht (4);
- eine erste Barriere - Schicht (5);
- eine zweite Antireflexschicht (6);
- eine zweite metallische, Infrarot reflektierende Schicht (7);
- eine zweite Barriere - Schicht (8);
- eine dritte Antireflexschicht (9);

**dadurch gekennzeichnet, dass** eine Licht absorbierende Schicht (2) zwischen dem Glassubstrat (1) und der ersten metallischen, Infrarot reflektierenden Schicht (4) vorgesehen ist.

2. Sonnenschutzglas nach Anspruch 1 **dadurch gekennzeichnet, dass** die Licht absorbierende Schicht (2)im wesentlichen metallisch ist und das Metall vorzugsweise Titan ist.

3. Sonnenschutzglas nach Anspruch 1 **dadurch gekennzeichnet, dass** die Licht absorbierende Schicht im wesentlichen ein elektrisch leitendes Metalloxid, ein Metall - Suboxid und/oder ein Metall - Nitrid ist.

4. Sonnenschutzglas nach einem der vorhergehenden Ansprüche **dadurch gekennzeichnet, dass** mindestens eine der Infrarot reflektierenden Schichten (4,7) im wesentlichen Silber enthält, vorzugsweise beide Schichten (4,7).

5. Sonnenschutzglas nach einem der vorhergehenden Ansprüche **dadurch gekennzeichnet, dass** mindestens eine der Antireflexschichten (3,6,9) im wesentlichen Zinkoxid enthält, vorzugsweise alle drei Schichten.

6. Sonnenschutzglas nach einem der vorhergehenden Ansprüche **dadurch gekennzeichnet, dass** die Lichttransmission des Schichtsystems kleiner 65% ist und die spektrale Selektivität grösser 1,8 ist, gemessen an einer Isolierglasdoppelanordnung mit zwei 6 mm dicken Gläsern welche 12 mm beabstandet sind wobei das Schichtsystem auf der Innenseite eines der Gläser angeordnet ist.

7. Sonnenschutzglas nach einem der vorhergehenden Ansprüche **dadurch gekennzeichnet, dass** das Sonnenschutzglas unabhängig vom Betrachtungswinkel (BW) im Bereich bis 45° eine im wesentlichen konstante Reflexionsfarbe von $\Delta E < 3$ aufweist bei einer Lichtreflexion von RV < 15%, gemessen an einer Isolierglasdoppelanordnung mit zwei 6 mm dicken Gläsern welche 12 mm beabstandet sind wobei das Schichtsystem auf der Innenseite eines der Gläser angeordnet ist.

8. Verfahren zur Herstellung eines Sonnenschutzglas mit einem Sonnenschutzbeschichtungssystem (2-10) durch abscheiden mindestens folgender Schichten in Sequenz, auf ein Glassubstrat(1):

- eine erste Antireflexschicht (3);
- eine erste metallische, Infrarot reflektierende Schicht (4);
- eine erste Barriere - Schicht (5);
- eine zweite Antireflexschicht (6);
- eine zweite metallische, Infrarot reflektierende Schicht (7);
- eine zweite Barriere - Schicht (8);
- eine dritte Antireflexschicht (9);

**dadurch gekennzeichnet, dass** zusätzlich eine Licht absorbierende Schicht (2) zwischen dem Glassubstrat (1) und der ersten metallischen, Infrarot reflektierenden Schicht (4) abgeschieden wird.

9. Verfahren nach Anspruch 8 **dadurch gekennzeichnet, dass** als Licht absorbierende Schicht (2)im wesentlichen eine metallische Schicht abgeschieden wird und das Metall vorzugsweise Titan ist.

10. Verfahren nach Anspruch 8 **dadurch gekennzeichnet, dass** als Licht absorbierende Schicht im wesentlichen ein elektrisch leitendes Metalloxid abgeschieden wird, ein Metall - Suboxid und/oder ein Metall - Nitrid.

11. Verfahren nach einem der vorhergehenden Ansprüche 8 bis 10 **dadurch gekennzeichnet, dass** mindestens eine der Infrarot reflektierenden Schichten (4,7) im wesentlichen als Silber enthaltende Schicht abgeschieden wird, vorzugsweise beide Schichten (4,7).

**12.** Verfahren nach einem der vorhergehenden Ansprüche 8 bis 11 **dadurch gekennzeichnet, dass** mindestens eine der Antireflexschichten (3,6,9) im wesentlichen als Zinkoxidschicht abgeschieden wird, vorzugsweise alle drei Schichten.

**13.** Verfahren nach einem der vorhergehenden Ansprüche 8 bis 12 **dadurch gekennzeichnet, dass** die Lichttransmission des abgeschiedenen Schichtsystems kleiner 65% ist und die spektrale Selektivität grösser 1,8 ist, gemessen an einer Isolierglasdoppelanordnung mit zwei 6 mm dicken Gläsern welche 12 mm beabstandet sind wobei das Schichtsystem auf der Innenseite eines der Gläser angeordnet ist.

**14.** Verfahren nach einem der vorhergehenden Ansprüche 8 bis 13 **dadurch gekennzeichnet, dass** das Sonnenschutzglas mit dem abgeschiedenen Schichtsystem, unabhängig vom Betrachtungswinkel (BW) im Bereich bis 45° eine im wesentlichen konstante Reflexionsfarbe von $\Delta E < 3$ aufweist bei einer Lichtreflexion von $R_v < 15\%$, gemessen an einer Isolierglasdoppelanordnung mit zwei 6 mm dikken Gläsern welche 12 mm beabstandet sind wobei das Schichtsystem auf der Innenseite eines der Gläser angeordnet ist.

**15.** Verfahren nach einem der vorhergehenden Ansprüche 8 bis 14 **dadurch gekennzeichnet, dass** das Schichtsystem in einer Inline - Vakuumplasmaprozessanlage abgeschieden wird und der Plasmaprozess vorzugsweise ein Katodenzerstäubungsprozess ist und dieser insbesondere ein Magnetron - Zerstäubungsverfahren ist.

EP 1 424 315 A1

Fig. 1

Fig. 2

**Fig. 3**

**Europäisches Patentamt**

# EUROPÄISCHER RECHERCHENBERICHT

Nummer der Anmeldung

EP 03 02 5805

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 197 31 438 A (GLAVERBEL) 29. Januar 1998 (1998-01-29) * Ansprüche; Beispiele * --- | 1,3-8, 10-15 | C03C17/36 |
| P,X | WO 03 010105 A (YU LI-MING ;BILLERT ULRICH (DE); SCHUETT JUERGEN (DE); SAINT GOBAI) 6. Februar 2003 (2003-02-06) * Ansprüche; Beispiele * --- | 1,2,4-9, 11-15 | |
| A | WO 02 48065 A (BROCHOT JEAN-PIERRE ;SAINT GOBAIN GLASS FRANCE (FR); COUSTET VALER) 20. Juni 2002 (2002-06-20) * Ansprüche; Beispiele * * Seite 14, Zeile 10 - Zeile 17 * * Seite 6, Zeile 1 - Zeile 10 * --- | 1-15 | |
| D,A | EP 0 918 044 A (GLAVERBEL) 26. Mai 1999 (1999-05-26) * Ansprüche; Beispiele * --- | 1-15 | |
| D,A | EP 1 044 934 A (NIPPON SHEET GLASS CO LTD) 18. Oktober 2000 (2000-10-18) * Ansprüche; Beispiele * ----- | 1-15 | RECHERCHIERTE SACHGEBIETE (Int.Cl.7) C03C |

Der vorliegende Recherchenbericht wurde für alle Patentansprüche erstellt

| Recherchenort | Abschlußdatum der Recherche | Prüfer |
|---|---|---|
| DEN HAAG | 11. März 2004 | Van Bommel, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**    EP 03 02 5805

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-03-2004

| Im Recherchenbericht angeführtes Patentdokument | Datum der Veröffentlichung | Mitglied(er) der Patentfamilie | Datum der Veröffentlichung |
|---|---|---|---|
| DE 19731438 A | 29-01-1998 | BE 1011444 A3 | 07-09-1999 |
| | | CA 2211420 A1 | 25-01-1998 |
| | | CH 692505 A5 | 15-07-2002 |
| | | CN 1173428 A ,B | 18-02-1998 |
| | | DE 19731438 A1 | 29-01-1998 |
| | | ES 2156655 A1 | 01-07-2001 |
| | | FR 2751666 A1 | 30-01-1998 |
| | | GB 2315496 A ,B | 04-02-1998 |
| | | IT TO970572 A1 | 26-01-1998 |
| | | LU 90108 A1 | 13-01-1998 |
| | | NL 1006500 C2 | 23-02-1999 |
| | | NL 1006500 A1 | 28-01-1998 |
| | | SE 513629 C2 | 09-10-2000 |
| | | SE 9702555 A | 26-01-1998 |
| | | US 5993950 A | 30-11-1999 |
| WO 03010105 A | 06-02-2003 | FR 2827855 A1 | 31-01-2003 |
| | | WO 03010105 A1 | 06-02-2003 |
| WO 0248065 A | 20-06-2002 | FR 2818272 A1 | 21-06-2002 |
| | | AU 1725402 A | 24-06-2002 |
| | | EP 1341732 A1 | 10-09-2003 |
| | | WO 0248065 A1 | 20-06-2002 |
| EP 0918044 A | 26-05-1999 | EP 0918044 A1 | 26-05-1999 |
| | | AU 1669099 A | 07-06-1999 |
| | | WO 9925661 A1 | 27-05-1999 |
| | | EP 1032543 A1 | 06-09-2000 |
| | | JP 2001523632 T | 27-11-2001 |
| | | PL 340594 A1 | 12-02-2001 |
| EP 1044934 A | 18-10-2000 | JP 2000302486 A | 31-10-2000 |
| | | EP 1044934 A2 | 18-10-2000 |
| | | US 6592996 B1 | 15-07-2003 |

EPO FORM P0461

Für nähere Einzelheiten zu diesem Anhang : siehe Amtsblatt des Europäischen Patentamts, Nr.12/82